# EUROPEAN PATENT APPLICATION

(11) **EP 2 704 070 A1**
(43) Date of publication of application: **05.03.2014**
(21) Application number: 13182107.6
(22) Date of filing: 28.08.2013
(51) Int. Cl.: G06Q 10/10, G06F 3/0488

(54) **Method of Displaying Calendar and Electronic Device Therefor**

(30) Priority: 28.08.2012 KR 20120094158
(71) Applicant: Samsung Electronics Co., Ltd, Gyeonggi-do 443-742 (KR)
(72) Inventor: Moon, Chan-Young, Gyeonggi-do (KR); Ok, Dong-Min, Seoul (KR)
(74) Representative: Birchenough, Lewis

(57) **Abstract**

A method and an apparatus for controlling output of a calendar in an electronic device are provided. The method includes displaying an electronic calendar, detecting a gesture on the displayed electronic calendar, updating the displayed electronic calendar to a calendar which has a difference by a predetermined period according to a period of the displayed electronic calendar when the detected gesture corresponds to a predetermined gesture, and displaying the updated calendar, wherein the predetermined period corresponds to a period which is longer than that of the displayed electronic calendar.

## Description

### BACKGROUND OF THE INVENTION

### 1. Field of the Invention:

The present invention relates to an electronic device. More particularly, the present invention relates to a method and apparatus for controlling output of a calendar in an electronic device.

### 2. Description of the Related Art:

Recently, rapid development of electronic devices such as smart phones and tablet Personal Computers (PCs) capable of performing wireless voice communication and exchanging information has lead such electronic devices to become necessities of life of users. For example, when the electronic devices were first developed, the electronic devices were recognized as portable devices capable of simply performing wireless communication. However, as technologies of the electronic devices developed and as wireless internet has been introduced, the electronic devices are no longer considered portable devices capable of simply performing wireless communication. Rather, the electronic devices have been developed into multimedia devices capable of a scheduling function, a game function, a remote control function, a photography function, a projector function, and the like to satisfy needs of a user.

Recently, electronic devices for providing a calendar application capable of adding a memo function to a simple calendar function and managing a schedule of the user have been developed. Each of the electronic devices provides a calendar application for displaying an electronic calendar including next schedules and previous schedules to the user. The calendar application may display an electronic calendar for a specific day, week, or month according to control of the user. For example, the user may verify a schedule after or before six months through a memo written in the calendar application of the electronic device. However, because the electronic device updates a monthly calendar which is currently being displayed to a calendar before or after one month according to control of the user, there is an inconvenience in that the electronic device must update the corresponding monthly calendar six times to verify a schedule before or after six months. Therefore, a method of allowing the user to update a calendar which is currently being displayed to a calendar including a desired date easily in the calendar application of the electronic device is needed.

Therefore, a need exists for a method and apparatus for updating a calendar in an electronic device.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a method and apparatus for updating a calendar in an electronic device.

Another aspect of the present invention is to provide a method and apparatus for sensing at least two or more touches and updating a calendar.

Another aspect of the present invention is to provide a method and apparatus for updating a calendar which is currently being displayed to a calendar which has a difference by a predetermined period according to a period of the calendar which is currently being displayed.

In accordance with an aspect of the present invention, a method of displaying a calendar in an electronic device is provided. The method includes displaying an electronic calendar, detecting a gesture on the displayed electronic calendar, updating the displayed electronic calendar to a calendar which has a difference by a predetermined period according to a period of the displayed electronic calendar when the detected gesture corresponds to a predetermined gesture and displaying the updated calendar, wherein the predetermined period corresponds to a period which is longer than that of the displayed electronic calendar.

In accordance with another aspect of the present invention, an electronic device for displaying a calendar is provided. The electronic device includes at least one processor, a touch-sensitive display, a memory, and at least one program, each which is stored in the memory and is configured to be executed by the at least one processor, wherein each of the at least one program includes an instruction for displaying an electronic calendar, detecting a gesture on the displayed electronic calendar, updating the displayed electronic calendar to a calendar which has a difference by a predetermined period according to a period of the displayed electronic calendar when the detected gesture corresponds to a predetermined gesture and displaying the updated calendar, wherein the predetermined period corresponds to a period which is longer than that of the displayed electronic calendar.

In accordance with another aspect of the present invention, a non-transitory computer readable medium which stores at least one program is provided. The non-transient computer readable medium includes instructions that, when executed, cause an electronic device to display an electronic calendar, detect a gesture on the displayed electronic calendar, update the displayed electronic calendar to a calendar which has a difference by a predetermined period according to a period of the displayed electronic calendar when the detected gesture corresponds to a predetermined gesture, and display the updated calendar, wherein the predetermined period corresponds to a period which is longer than that of the displayed electronic calendar.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1A is a block diagram illustrating a configuration of an electronic device for updating a calendar according to an exemplary embodiment of the present invention;

FIG. 1B is a block diagram illustrating a detailed configuration of a processor of an electronic device according to an exemplary embodiment of the present invention;

FIG. 2A is a flowchart illustrating a process of updating a calendar in an electronic device according to an exemplary embodiment of the present invention;

FIG. 2B is a block diagram illustrating configuration of an apparatus for updating a calendar in an electronic device according to an exemplary embodiment of the present invention;

FIG. 3 is a flowchart illustrating a process of detecting at least two touches and updating a calendar by a predetermined period in an electronic device according to an exemplary embodiment of the present invention;

FIG. 4 includes screens illustrating an example of a process of detecting at least two touches and updating a daily calendar in an electronic device according to an exemplary embodiment of the present invention;

FIG. 5 includes screens illustrating an example of a process of detecting at least two touches and updating a daily calendar in an electronic device according to an exemplary embodiment of the present invention;

FIG. 6 includes screens illustrating an example of a process of detecting at least two touches and updating a weekly calendar in an electronic device according to an exemplary embodiment of the present invention;

FIG. 7 includes screens illustrating an example of a process of detecting at least two touches and updating a weekly calendar in an electronic device according to an exemplary embodiment of the present invention;

FIG. 8 includes screens illustrating an example of a process of detecting at least two touches and updating a monthly calendar in an electronic device according to an exemplary embodiment of the present invention;

FIG. 9 includes screens illustrating an example of a process of detecting at least two touches and updating a monthly calendar in an electronic device according to an exemplary embodiment of the present invention;

FIG. 10 includes screens illustrating an example of a process of detecting a curved gesture and updating a daily calendar in an electronic device according to an exemplary embodiment of the present invention;

FIG. 11 includes screens illustrating an example of a process of detecting a curved gesture and updating a daily calendar in an electronic device according to an exemplary embodiment of the present invention;

FIG. 12 includes screens illustrating an example of a process of detecting a curved gesture and updating a weekly calendar in an electronic device according to an exemplary embodiment of the present invention;

FIG. 13 includes screens illustrating an example of a process of detecting a curved gesture and updating a weekly calendar in an electronic device according to an exemplary embodiment of the present invention;

FIG. 14 includes screens illustrating an example of a process of detecting a curved gesture and updating a monthly calendar in an electronic device according to an exemplary embodiment of the present invention; and

FIG. 15 includes screens illustrating an example of a process of detecting a curved gesture and updating a monthly calendar in an electronic device according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions or constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

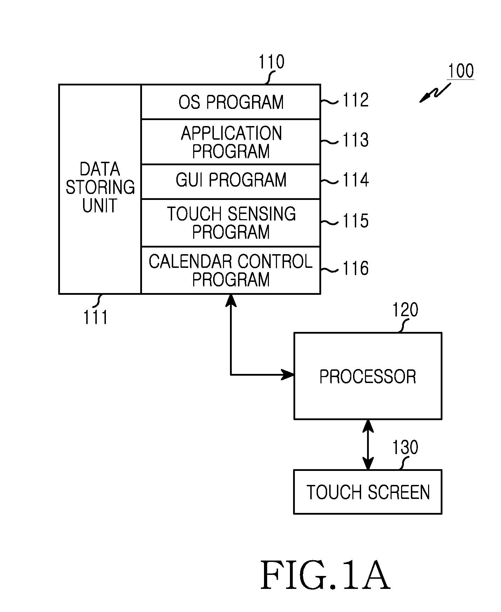

FIG. 1A is a block diagram illustrating a configuration of an electronic device for updating a calendar according to an exemplary embodiment of the present invention.

Referring to FIG. 1A, the electronic device 100 includes a memory 110, a processor 120, and a touch screen 130. The memory 110 may include a plurality of memories. The processor 120 may include a plurality of processors.

The memory 110 includes a data storing unit 111, an Operating System (OS) program 112, an application program 113, a Graphic User Interface (GUI) program 114, a touch sensing program 115, a calendar control program 116, and the like. The programs, which are software components, may be expressed in a set of instructions. Accordingly, the programs are expressed in an instruction set or modules. The memory 110 may store one or more programs including instructions for performing exemplary embodiments of the present invention.

The data storing unit 111 stores data items generated when functions corresponding to the programs stored in the memory 110 are performed. According to exemplary embodiments of the present invention, the data storing unit 111 stores a data item indicating an update period by a period of a calendar. For example, the data storing unit 111 stores a data item indicating one week in case of a daily calendar, a data item indicating four weeks in case of a weekly calendar, and a data item indicating one year in case of a monthly calendar. The period of the calendar corresponds to a unit in which the calendar is displayed. For example, in case of a monthly calendar, a period of the monthly calendar means one month. In case of a weekly calendar, a period of the weekly calendar means one week. In case of a daily calendar, a period of the daily calendar means one day.

The update period by the period of the calendar corresponds to a period to be updated at a corresponding calendar which is being displayed when at least two or more touches are sensed (e.g., detected) by the touch sensing program 115. For one example, when at least two or more touches are sensed in a daily calendar mode of a calendar, the data storing unit 111 may stores a data item indicating that an update period is one week to update a date of the calendar which is being displayed to a date before or after one week. As another example, when at least two or more touches are sensed in a weekly calendar mode of a calendar, the data storing unit 111 may store a data item indicating that an update period is four weeks to update a week of the calendar which is being displayed to a week before or after four weeks. As another example, when at least two or more touches are sensed in a monthly calendar mode of a calendar, the data storing unit 111 may store a data item indicating that an update period is one year to update a month of the calendar which is being displayed to a month before or after one year.

When the update period by the period of the calendar is designed to a period which is longer than a period of a calendar which is currently being output, the update period may be preset or may be set or changed by a user. For example, when a calendar which is currently being output is in a daily calendar mode, a predetermined period may be a period which is longer than one day, such as two days, four days, five days, and the like. As another example, when a calendar which is currently being output is in a weekly calendar mode, a predetermined period may be a period which is longer than one week, such as two weeks, four weeks, seven weeks, and the like. As another example, when a calendar which is currently being output is in a monthly calendar mode, a predetermined period may be a period which is longer than one month, such as six months, one year, two years, and the like.

The OS program 112 (e.g., an embedded OS such as Windows, Linux, Darwin, RTXC, UNIX, OS X, VxWorks, or the like) includes several software components for controlling a general system operation. For example, control of this general system operation includes memory management and control, storage hardware (device) control and management, power control and management, and the like. The OS program 112 also performs a function for smoothly communicating between several hardware components (devices) and software components (programs).

The GUI program 114 includes at least one software component for providing a user interface using graphics between the user and the electronic device 100. For example, the GUI program 114 includes at least one software component for displaying user interface information on the touch screen 130. According to exemplary embodiments of the present invention, the GUI program 114 includes an instruction for displaying a calendar on the touch screen 130. Particularly, when at least two touches are sensed, in a state in which a calendar is displayed, by the touch sensing program 115, the GUI program 114 includes an instruction for displaying the calendar by the calendar control program 116. For example, the GUI program 114 includes an instruction for displaying a calendar for September 2012 on the touch screen 130. The GUI program 114 may include an instruction for visually displaying a screen on which a calendar for September 2012 is updated to a calendar for September 2013 by at least two or more touches.

The touch sensing program 115 interworks with the touch screen 130 and senses touch input on a touch sensing surface. For example, the touch sensing program 115 determines whether a touch is generated on a touch sensing surface, determines a movement of the touch, determines a movement direction and time of the touch, and determines whether the touch is stopped. The determination of the movement of the touch may include determining a movement speed (e.g., magnitude), determining a movement velocity (e.g., magnitude and direction), or/and determining an acceleration (e.g., including magnitude or/and direction) of the touch.

According to exemplary embodiments of the present invention, the touch sensing program 115 senses at least one or more touches on a calendar which is being displayed on the touch screen 130. The electronic device (e.g., the touch screen 130) may be configured to detect a variety of gestures such as taps, taps during a certain time (or long taps), double taps, drags and the like. The detected gestures may correspond to a touch which the electronic device may determine relates to the at least one or more touches on the calendar. The drags include a drag which proceeds in an upper/lower/left/right/diagonal direction, a drag forming a specific shape, and the like. The drags may be all drags in which a touch may proceed.

For example, the touch sensing program 115 may sense that a touch is started on a certain region of a displayed calendar, sense a drag which proceeds in a specific direction in a state in which the touch is held, and sense that the touch is released on a region at which the drag is ended. As another example, the touch sensing program 115 may sense that two touches are started on a certain region of a displayed calendar, sense a drag which proceeds in a specific direction in a state in which the two touches are held, and sense that the two touches are released on a region at which the drag is ended. As another example, the touch sensing program 115 may sense that a touch is started on a certain region of a displayed calendar and sense that the sensed touch is released. As another example, the touch sensing program 115 may sense two touches on a certain region of a displayed calendar simultaneously and sense that the sensed two touches are simultaneously released. As another example, the touch sensing program 115 may sense that two touches are started on a certain region of a displayed calendar simultaneously and sense that the sensed two touches are simultaneously released.

When one touch is sensed by the touch sensing program 115, the calendar control program 116 performs a basic function. For example, when a drag is detected in a specific direction, the basic function corresponds to a function for updating a calendar which is being displayed to a calendar which has difference by a period of the displayed calendar. As another example, when a touch is sensed on a specific date, the basic function corresponds to a function for selecting the specific date corresponding to the sensed touch. For example, when a drag is sensed to the right by the touch sensing program 115 in a state in which a monthly calendar mode is displayed, the calendar control program 116 may update a calendar which is currently being displayed to a calendar of a next month. As another example, when a touch on September 28 is sensed, in a state in which a monthly calendar mode is displayed, by the touch sensing program 115, the calendar control program 116 may select September 28.

In addition, when at least two or more touches are sensed by the touch sensing program 115, the calendar control program 116 updates a calendar which is currently being displayed to a calendar which has a difference by a predetermined update period based on an update period by a calendar period. The predetermined update period by a calendar period may be one week in case of a daily calendar, may be four weeks in case of a weekly calendar, and may be one year in case of a monthly calendar. For example, if two or more touches are sensed in a state in which a calendar for September 2012 is currently being output, the calendar control program 116 may update the calendar which is currently being output to a calendar for September 2011 (e.g., one year prior) or a calendar for September 2013 (e.g., one year later). As another example, if two or more touches are sensed in a state in which a calendar of the 44th week of 2012 is currently being output, the calendar control program 116 may update the calendar which is currently being output to a calendar of the 40th week of 2012 (e.g., 4 weeks prior) or a calendar of the 48th week of 2012 (e.g., 4 weeks later). As another example, if two or more touches are sensed in a state in which a calendar for September 28, 2012 is currently being output, the calendar control program 116 may update the calendar which is currently being output to a calendar for September 21, 2012 (e.g., one week prior) or a calendar for October 5, 2012 (e.g., one week later).

As an example, if two drags which proceed to the right simultaneously are sensed in a state in which a calendar for September 2012 is currently being output, the calendar control program 116 may update the calendar which is currently being output to a calendar for September 2011 (e.g., one year prior) or a calendar for September 2013 (e.g., one year later). As another example, if two drags which proceed to the right simultaneously are sensed in a state in which a calendar of the 44th week of 2012 is currently being output, the calendar control program 116 may update the calendar which is currently being output to a calendar of the 40th week of 2012 (e.g., four weeks prior) or a calendar of the 48th week of 2012 (e.g., four weeks later). As another example, if two drags which proceed to the right simultaneously are sensed in a state in which a calendar for September 28, 2012 is currently being output, the calendar control program 116 may update the calendar which is currently being output to a calendar for September 21, 2012 (e.g., one week prior) or a calendar for October 5, 2012 (e.g., one week later). The touch screen 130 may be configured to detect a variety of gestures such as taps, taps during a certain time (or long taps), double taps, drags, and the like. The detected gestures may correspond to a touch which the electronic device may determine relates to the at least two or more touches. The drags include a drag which proceeds in an upper/lower/left/right/diagonal direction, a drag forming a specific shape, and the like. The drags may be all drags in which a touch may proceed.

Although not shown in FIG. 1A, the processor 120 may include at least one processor and a peripheral interface. The processor 120 executes a specific program (instruction set) stored in the memory 110 and performs a plurality of specific functions corresponding to the program.

The touch screen 130 may be configured as a touch-sensitive display and may provide an interface for touch input/output between the electronic device 100 and the user. The touch screen 130 is a medium for sensing a touch through a touch sensor (not shown), transmitting the sensed touch input to the electronic device 100, and visually outputting output from the electronic device 100 to the user. The touch screen 130 provides visual output based on text, graphics, and video to the user in response to touch input.

The touch screen 130 includes a touch sensing surface for sensing touch input of the user. The touch screen 130 senses touch input of the user by a haptic touch, a tactile touch, and the like, of a combination thereof. For example, a touch sensing point of the touch screen 130 corresponds to a width of a digit used in a touch on a touch sensing surface. The touch screen 130 senses a touch by an external device such as a stylus pen through a touch sensing surface. The touch screen 130 interworks with the touch sensing program 115 and detects a touch thereon. The detected touch is converted into interaction corresponding to a user interface target (e.g., a soft key) displayed on the touch screen 130.

The touch screen 130 may correspond to a display such as a Liquid Crystal Display (LCD), a Light Emitting Diode (LED), a Light emitting Polymer Display (LPD), an Organic Light Emitting Diode (OLED), an Active Matrix Organic Light Emitting Diode (AMOLED), a Flexible LED (FLED), and the like, or a combination thereof. According to exemplary embodiments of the present invention, the touch screen 130 is not limited to the above-identified display types. The touch screen 130 may sense the start of a touch on a touch sensing surface, the movement of the touch, or the stop or end of the touch using several touch detection (or sensing) technologies such as capacitive, resistive, infrared, and surface acoustic wave detection technologies. According to exemplary embodiments of the present invention, the touch screen 130 senses at least one or more touches from the user and senses a release of the sensed touches. The touches sensed by the touch screen 130 may correspond to gestures such as taps, taps during a certain time, double taps, drags, and the like.

Although not shown in FIG. 1A, according to exemplary embodiments of the present invention, the electronic device 100 may further include a proximity sensor. The electronic device 100 may sense input according to a motion of the user, which is performed on the touch screen 130, through the proximity sensor and perform the above-described calendar update operation based on the sensed gesture. For example, the electronic device 100 may determine the start of a motion of the user, which is performed on the touch screen 130, determine a movement direction of the motion, determine a movement time of the motion, determine whether the motion is stopped, and the like, through the proximity sensor. The electronic device 100 may perform a calendar update operation based on the determination.

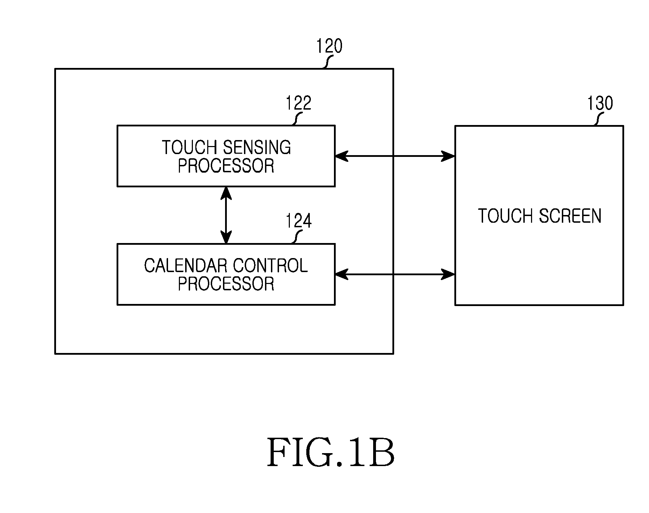

FIG. 1B is a block diagram illustrating detailed configuration of a processor of an electronic device for updating a calendar according to an exemplary embodiment of the present invention.

Referring to FIG. 1B, the processor 120 includes a touch sensing processor 122 and a calendar control processor 124.

The touch sensing processor 122 interworks with the touch screen 130 and senses touch input on a touch sensing surface. For example, the touch sensing processor 122 determines whether a touch is generated on a touch sensing surface, determines a movement of the touch, determines a movement direction and a time of the touch, and determines whether the touch is stopped. The determining of the movement of the touch may include determining a movement speed (e.g., magnitude), determining a movement velocity (e.g., magnitude and direction), or/and determining an acceleration (e.g., including magnitude or/and direction) of the touch.

According to exemplary embodiments of the present invention, the touch sensing processor 122 senses at least one or more touches on a calendar which is being displayed on the touch screen 130. The electronic device (e.g., the touch screen 130) may be configured to detect a variety of gestures such as taps, taps during a certain time (or long taps), double taps, drags, and the like. The detected gestures may correspond to a touch which the electronic device may determine relates to the at least one or more touches on the calendar. The drags include a drag which proceeds in an upper/lower/left/right/diagonal direction, a drag forming a specific shape, and the like. The drags may be all drags in which a touch may proceed.

For example, the touch sensing processor 122 may sense that a touch is started on a certain region of a displayed calendar, sense a drag which proceeds in a specific direction in a state in which the touch is held, and sense that the touch is released on a region at which the drag is ended. As another example, the touch sensing processor 122 may sense that two touches are started on a certain region of a displayed calendar, sense a drag which proceeds in a specific direction in a state in which the two touches are held, and sense that the two touches are released on a region at which the drag is ended. As another example, the touch sensing processor 122 may sense that a touch is started on a certain region of a displayed calendar and sense that the sensed touch is released. As another example, the touch sensing processor 122 may sense two touches on a certain region of a displayed calendar simultaneously and sense that the sensed two touches are simultaneously released. As another example, the touch sensing processor 122 may sense that two touches are started on a certain region of a displayed calendar simultaneously and sense that the sensed two touches are simultaneously released.

When one touch is sensed by the touch sensing processor 122, the calendar control processor 124 performs a basic function. For example, when a drag is detected in a specific direction, the basic function corresponds to a function for updating a calendar which is being displayed to a calendar which has difference by a period of the displayed calendar. As another example, when a touch is sensed on a specific date, the basic function corresponds to a function for selecting the specific date corresponding to the sensed touch. For example, when a drag is sensed to the right by the touch sensing processor 122 in a state in which a monthly calendar mode is displayed, the calendar control processor 124 may update a calendar which is currently being displayed to a calendar of a next month. As another example, when a touch on September 28 is sensed, in a state in which a monthly calendar mode is displayed, by the touch sensing processor 122, the calendar control processor 124 may select September 28.

In addition, when at least two or more touches are sensed by the touch sensing processor 122, the calendar control processor 124 updates a calendar which is currently being displayed to a calendar which has a difference by a predetermined update period based on an update period by a calendar period. The predetermined update period by a calendar period may be one week in case of a daily calendar, may be four weeks in case of a weekly calendar, and may be one year in case of a monthly calendar. For example, if two or more touches are sensed in a state in which a calendar for September 2012 is currently being output, the calendar control processor 124 may update the calendar which is currently being output to a calendar for September 2011 (e.g., one year prior) or a calendar for September 2013 (e.g., one year later). As another example, if two or more touches are sensed in a state in which a calendar of the 44th week of 2012 is currently being output, the calendar control processor 124 may update the calendar which is currently being output to a calendar of the 40th week of 2012 (e.g., 4 weeks prior) or a calendar of the 48th week of 2012 (e.g., 4 weeks later). As another example, if two or more touches are sensed in a state in which a calendar for September 28, 2012 is currently being output, the calendar control processor 124 may update the calendar which is currently being output to a calendar for September 21, 2012 (e.g., one week prior) or a calendar for October 5, 2012 (e.g., one week later).

As an example, if two drags which proceed to the right simultaneously are sensed in a state in which a calendar for September 2012 is currently being output, the calendar control processor 124 may update the calendar which is currently being output to a calendar for September 2011 (e.g., one year prior) or a calendar for September 2013 (e.g., one year later). As another example, if two drags which proceed to the right simultaneously are sensed in a state in which a calendar of the 44th week of 2012 is currently being output, the calendar control processor 124 may update the calendar which is currently being output to a calendar of the 40th week of 2012 (e.g., four weeks prior) or a calendar of the 48th week of 2012 (e.g., four weeks later). As another example, if two drags which proceed to the right simultaneously are sensed in a state in which a calendar for September 28, 2012 is currently being output, the calendar control processor 124 may update the calendar which is currently being output to a calendar for September 21, 2012 (e.g., one week prior) or a calendar for October 5, 2012 (e.g., one week later). The touch screen 130 may be configured to detect a variety of gestures such as taps, taps during a certain time (or long taps), double taps, drags, and the like. The detected gestures may correspond to a touch which the electronic device may determine relates to the at least two or more touches. The drags include a drag which proceeds in an upper/lower/left/right/diagonal direction, a drag forming a specific shape, and the like. The drags may be all drags in which a touch may proceed.

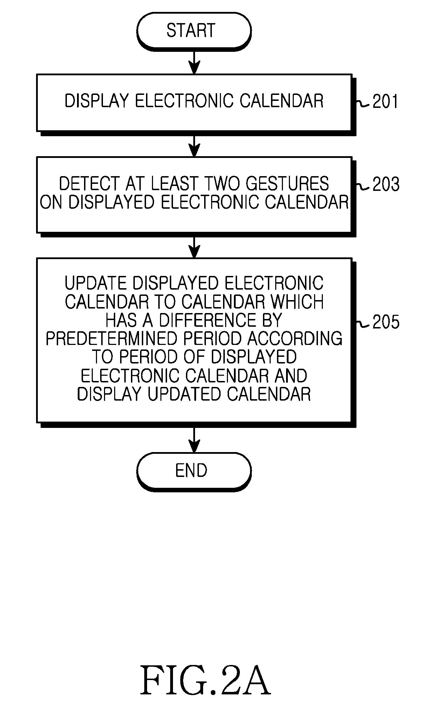

FIG. 2A is a flowchart illustrating a process of updating a calendar in an electronic device according to an exemplary embodiment of the present invention.

Referring to FIGS. 1A and 2A, in step 201, the electronic device 100 displays an electronic calendar. The displayed calendar may be any one of a daily calendar, a weekly calendar, a monthly calendar, and the like. Thereafter, the electronic device 100 proceeds to step 203.

In step 203, the electronic device 100 detects at least two gestures on the displayed electronic calendar. The gestures may be gestures capable of being sensed through the touch screen 130. For example, the gestures may correspond to taps, taps during a certain time (or long taps), double taps, drags, and the like. For one example, the electronic device 100 may detect two drags which proceed in a right direction on the displayed electronic calendar. As another example, the electronic device 100 may detect two touches on the displayed electronic calendar. Thereafter, the electronic device 100 proceeds to step 205.

In step 205, the electronic device 100 updates the displayed electronic calendar to a calendar which has a difference by a predetermined update period according to a period of the displayed electronic calendar, and displays the updated calendar. The predetermined update period indicates a period which is longer than that of the currently displayed calendar. For example, when a period of the currently displayed calendar is one month, the electronic device 100 may verify that a predetermined update period is one year and update the calendar which is being displayed to a calendar before or after one year.

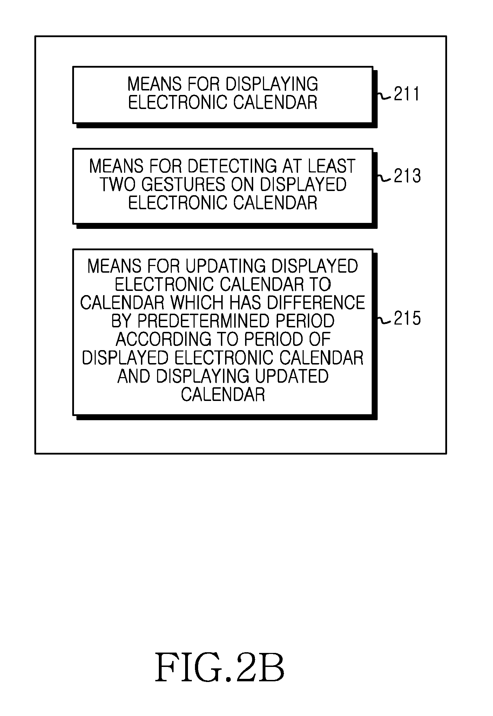

FIG. 2B is a block diagram illustrating configuration of an apparatus for detecting at least two touches and updating a calendar in an electronic device according to an exemplary embodiment of the present invention.

Referring to FIGS. 1A and 2B, the electronic device 100 includes a means 211 for displaying an electronic calendar and a means 213 for detecting at least two gestures on the displayed electronic calendar. The gestures may be gestures capable of being sensed through the touch screen 130. For example, the gestures may correspond to taps, taps during a certain time (or long taps), double taps, drags, and the like. The electronic device 100 may include a means 215 for updating the displayed electronic calendar to a calendar which has a difference by a predetermined period according to a period of the displayed electronic calendar and displaying the updated calendar. The predetermined update period indicates a period which is longer than that of the currently displayed calendar.

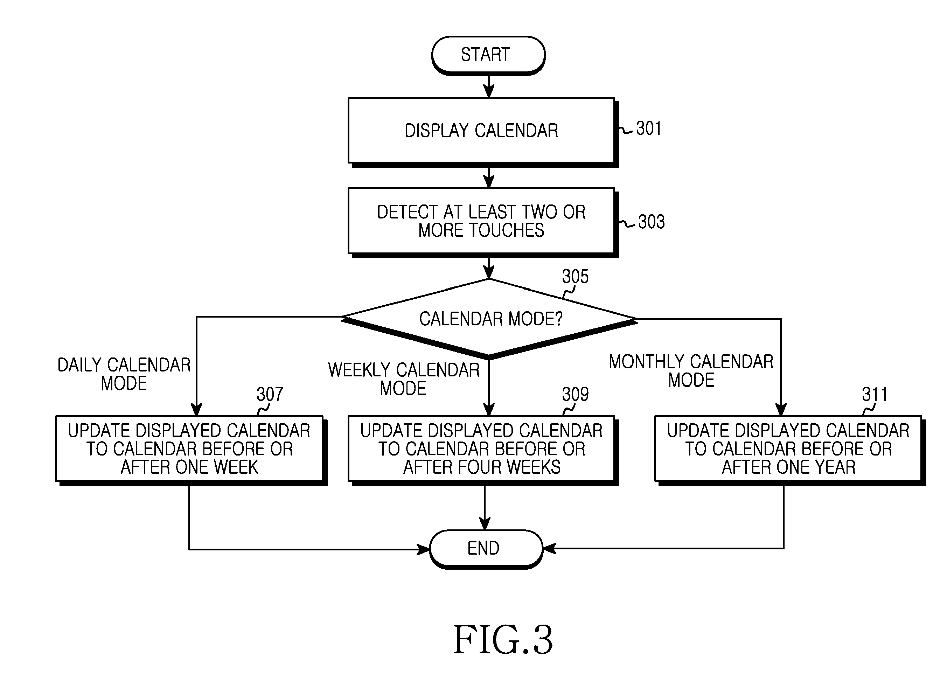

FIG. 3 is a flowchart illustrating a process of detecting at least two touches and updating a calendar by a predetermined period in an electronic device according to an exemplary embodiment of the present invention.

Referring to FIGS. 1A and 3, in step 301, the electronic device 100 displays a calendar. The displayed calendar may be in any one of a daily calendar mode, a weekly calendar mode, and a monthly calendar mode. Thereafter, the electronic device 100 proceeds to step 303.

In step 303, the electronic device 100 detects at least two or more touches. The touches may be gestures capable of being sensed through the touch screen 130. For example, the gestures may correspond to taps, taps during a certain time (or long taps), double taps, drags, and the like. The drags may include a drag which proceeds in a left/right/upper/lower/diagonal direction, a drag forming a specific shape, and the like. The drags may be all drags in which a touch may proceed.

Hereinafter, for the convenience of description, a description will be given for a drag in which a touch proceeds to the left/right or a drag which proceeds by a specific shape. However, exemplary embodiments of the present invention may be equally applied to when the touch corresponds to a gesture such as a tap, a tap during a certain time, a double tap, and the like.

In step 305, the electronic deice 100 determines a mode of the calendar. Herein, the mode of the calendar may be any one of a daily calendar mode, a weekly calendar mode, a monthly calendar mode, and the like.

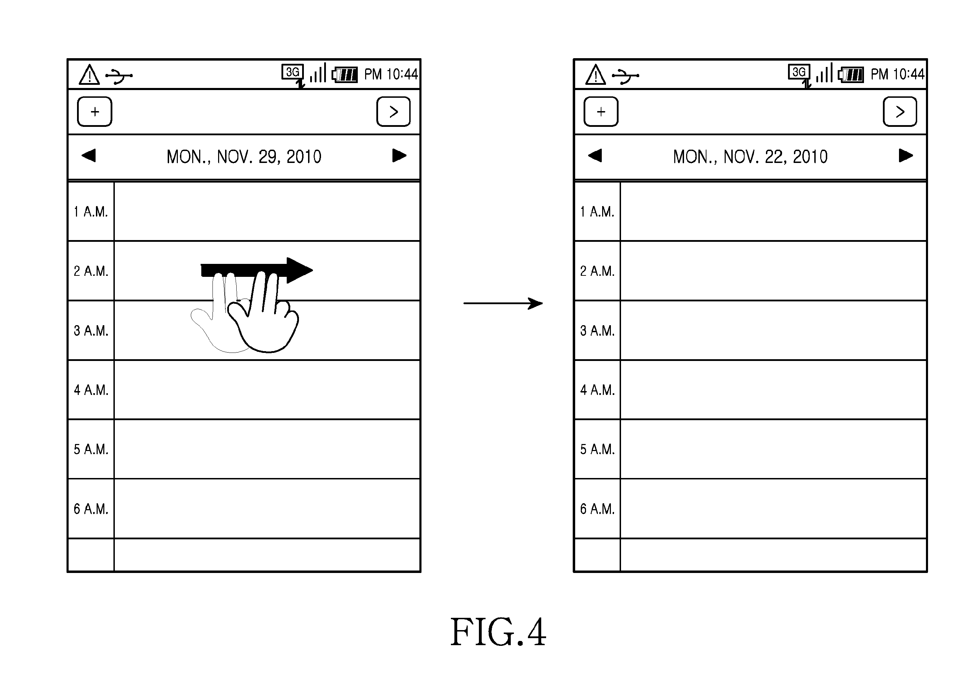

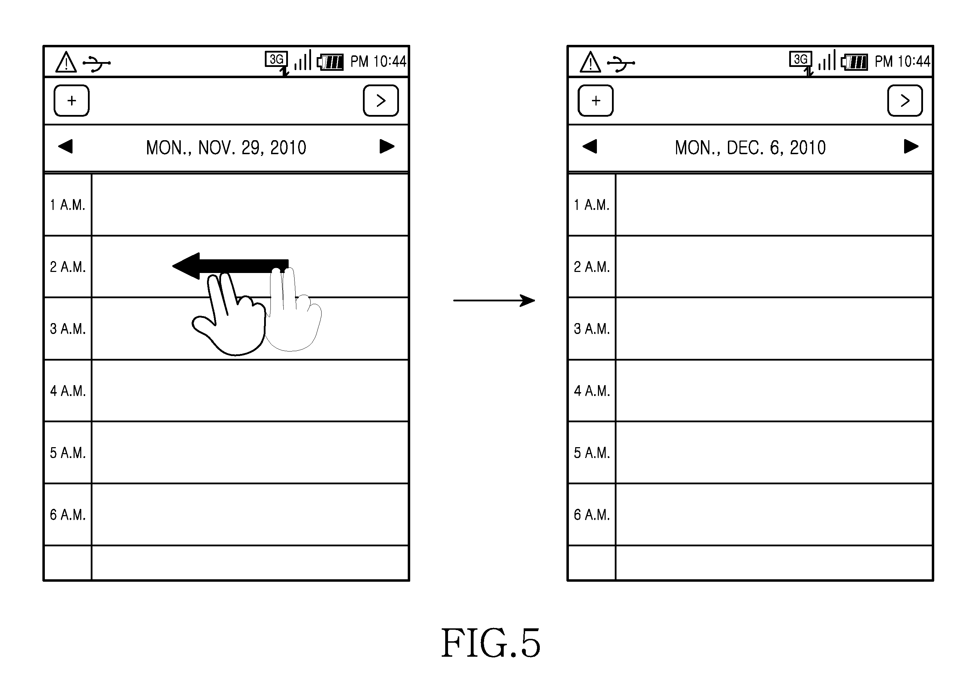

FIG. 4 includes screens illustrating an example of a process of detecting at least two touches and updating a daily calendar in an electronic device according to an exemplary embodiment of the present invention. FIG. 5 includes screens illustrating an example of a process of detecting at least two touches and updating a daily calendar in an electronic device according to an exemplary embodiment of the present invention.

Referring to FIGS. 4 and 5, if the electronic device 100 determines that the calendar is in the daily calendar mode in step 305, then the electronic device 100 proceeds to step 307 in which the electronic device 100 updates the displayed calendar to a calendar before or after one week, and thereafter ends the algorithms of FIG. 3. Referring to FIG. 4, when a drag which proceeds to the right in a state in which a daily calendar for November 29, 2010 is displayed, the electronic device 100 may update the calendar for November 29, 2010 which is currently being displayed to a calendar for November 22, 2010. Referring to FIG. 5, when a drag which proceeds to the left in a state in which a daily calendar for November 29, 2010 is displayed, the electronic device 100 may update the calendar for November 29, 2010 which is currently being displayed to a calendar for December 6, 2010.

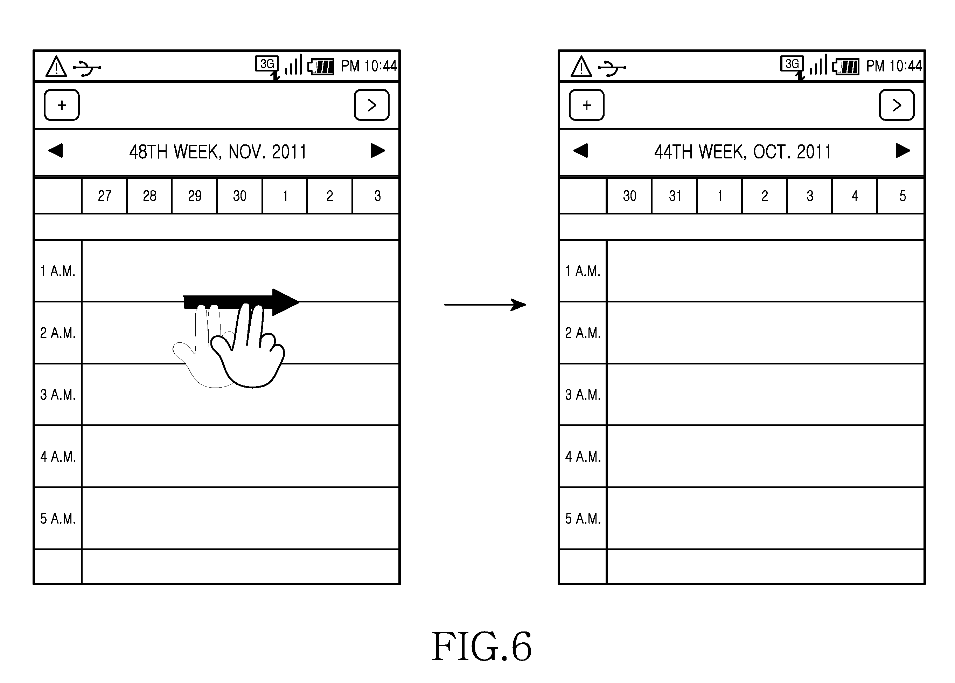

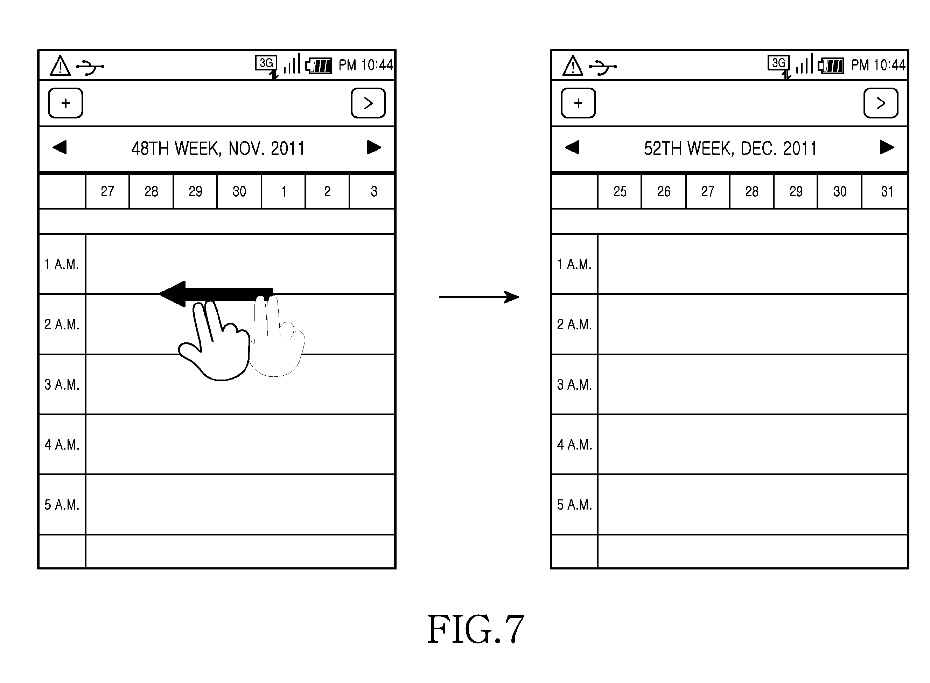

FIG. 6 includes screens illustrating an example of a process of detecting at least two touches and updating a weekly calendar in an electronic device according to an exemplary embodiment of the present invention. FIG. 7 includes screens illustrating an example of a process of detecting at least two touches and updating a weekly calendar in an electronic device according to an exemplary embodiment of the present invention.

Referring to FIGS. 6 and 7, if the electronic device 100 determines that the calendar is in the weekly calendar mode in step 305, then the electronic device 100 proceeds to step 309 in which the electronic device 100 updates the displayed calendar to a calendar before or after four weeks, and thereafter ends the algorithms of FIG. 3. Referring to FIG. 6 when a drag which proceeds to the right in a state in which a weekly calendar of the 48th of 2011 is displayed, the electronic device 100 may update the calendar of the 48th of 2011 which is currently being displayed to a calendar of the 44th of 2011. Referring to FIG. 7, when a drag which proceeds to the left in a state in which a weekly calendar of the 48th of 2011 is displayed, the electronic device 100 may update the calendar of the 48th of 2011 which is currently being displayed to a calendar of the 52th of 2011.

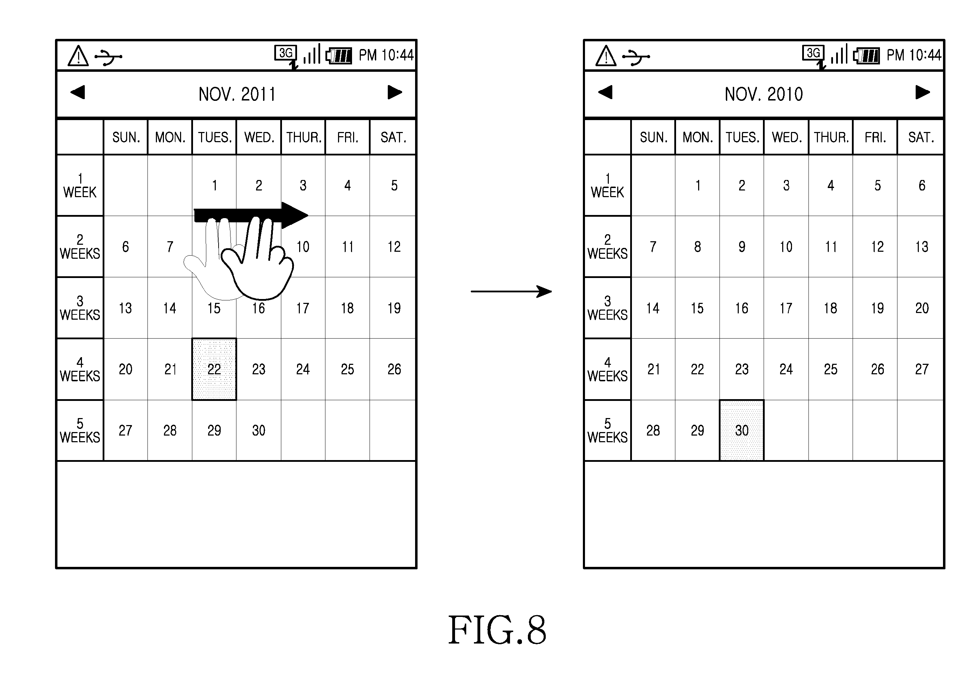

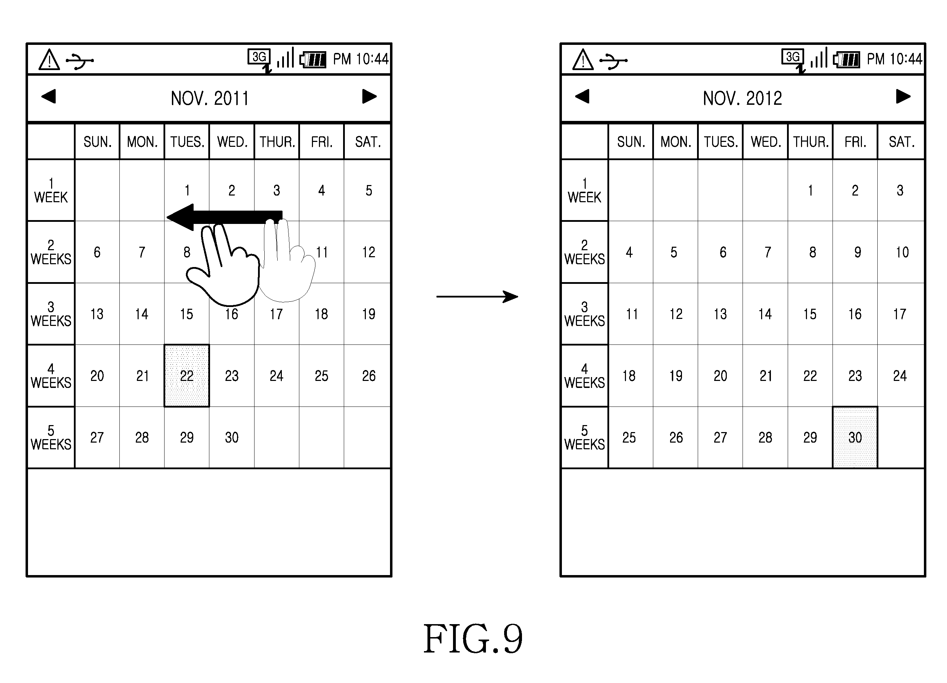

FIG. 8 includes screens illustrating an example of a process of detecting at least two touches and updating a monthly calendar in an electronic device according to an exemplary embodiment of the present invention. FIG. 9 includes screens illustrating an example of a process of detecting at least two touches and updating a monthly calendar in an electronic device according to an exemplary embodiment of the present invention.

Referring to FIGS. 8 and 9, if the electronic device 100 determines that the calendar is in the monthly calendar mode in step 305, then the electronic device 100 proceeds to step 311 in which the electronic device 100 updates the displayed calendar to a calendar before or after one year, and thereafter ends the algorithms of FIG. 3. Referring to FIG. 8, when a drag which proceeds to the right in a state in which a monthly calendar for November 2011 is displayed, the electronic device 100 may update the calendar for November 2011 which is currently being displayed to a calendar for November 2010. Referring to FIG. 9, when a drag which proceeds to the left in a state in which a monthly calendar for November 2011 is displayed, the electronic device 100 may update the calendar for November 2011 which is currently being displayed to a calendar for November 2012.

As described above, the electronic device 100 senses the drag which proceeds to the left or the right. In case of the daily calendar mode, the electronic device 100 updates the currently displayed calendar to the calendar before/after one week. In case of the weekly calendar mode, the electronic device 100 updates the currently displayed calendar to the calendar before/after four weeks (or some other number of weeks that may be configured by the user according to user preferences). In case of the monthly calendar mode, the electronic device 100 updates the currently displayed calendar to the calendar before/after one year. The present invention is not limited thereto.

According to exemplary embodiments of the present invention, a user may configure an extent to which the calendar updates upon the detection of a gesture. As an example, the user may configure the electronic device to update a calendar according to a specific number of weeks if the calendar is currently displaying the calendar. According to exemplary embodiments of the present invention, the user may configure an association between whether the calendar proceeds to a future date with a specific direction or movement of a gesture (e.g., a movement to the left), and may configure whether the calendar proceeds to an earlier date with a specific direction or movement of a gesture that is different than the direction or movement associated the calendar proceeding to the future date.

According to exemplary embodiments of the present invention, the extent to which a calendar updates may be associated with at least one of the speed and acceleration of a detected movement. For example, if a movement is quicker than a predefined threshold (which may be configurable by the user), then the calendar may update to a relatively further date into the future or a relatively further earlier date. According to exemplary embodiments of the present invention, the electronic device 100 may include a plurality of thresholds such that, for example, the calendar progressively updates to dates further into the future as the detected gesture is moved at a faster rate or as the gesture is accelerated. For example, the predetermined periods by which the calendar updates may be configured to relate to at least one of the speed and acceleration of the movement of the gestures.

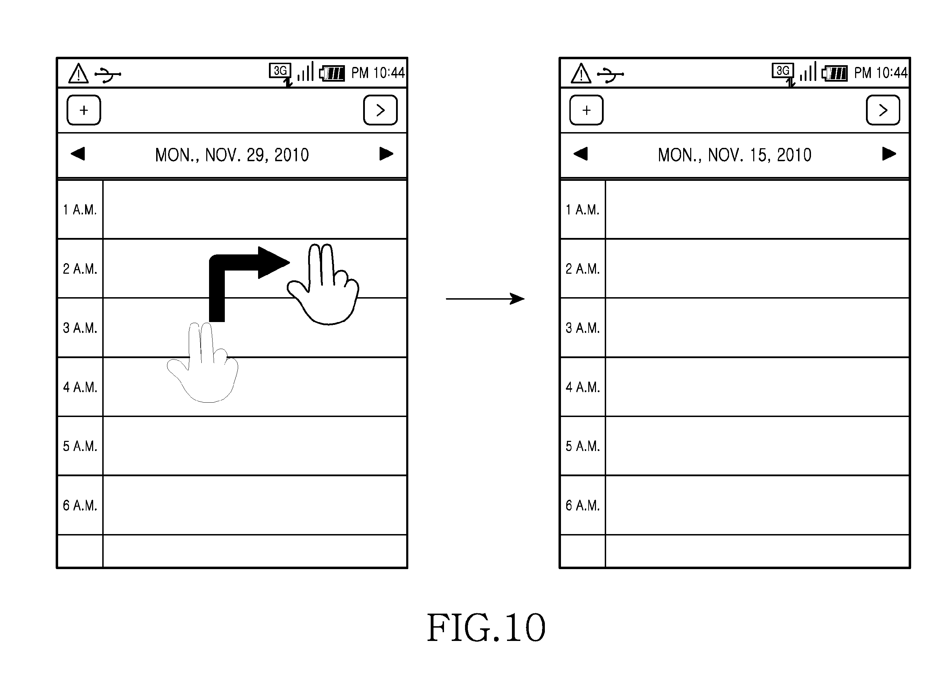

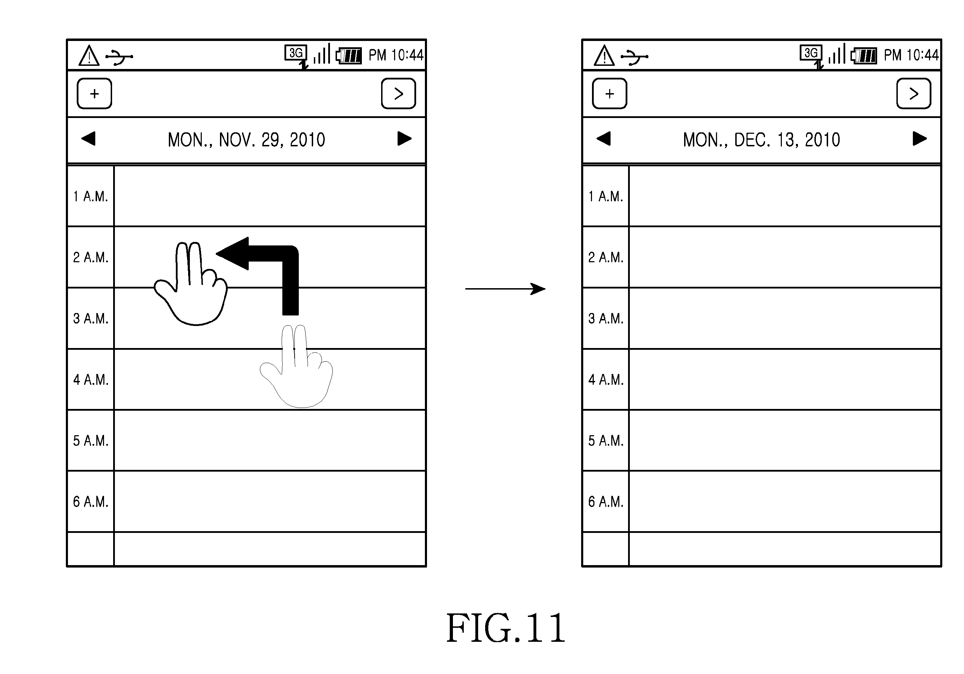

FIG. 10 includes screens illustrating an example of a process of detecting a curved gesture and updating a daily calendar in an electronic device according to an exemplary embodiment of the present invention. FIG. 11 includes screens illustrating an example of a process of detecting a curved gesture and updating a daily calendar in an electronic device according to an exemplary embodiment of the present invention.

Referring to FIG. 10, when a drag which proceeds up and right is sensed in a state in which a daily calendar for November 29, 2010 is displayed, the electronic device 100 may update the calendar for November 29, 2010 which is currently being displayed to a calendar for November 15, 2010. Referring to FIG. 11, when a drag which proceeds up and left is sensed in a state in which a daily calendar for November 29, 2010 is displayed, the electronic device 100 may update the calendar for November 29, 2010 which is currently being displayed to a calendar for December 13, 2010.

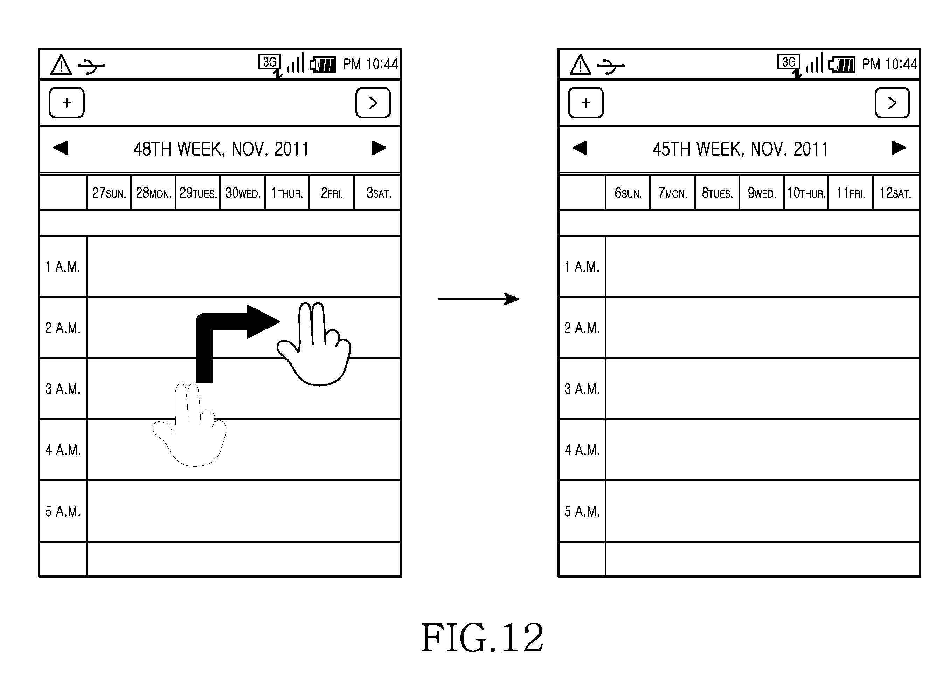

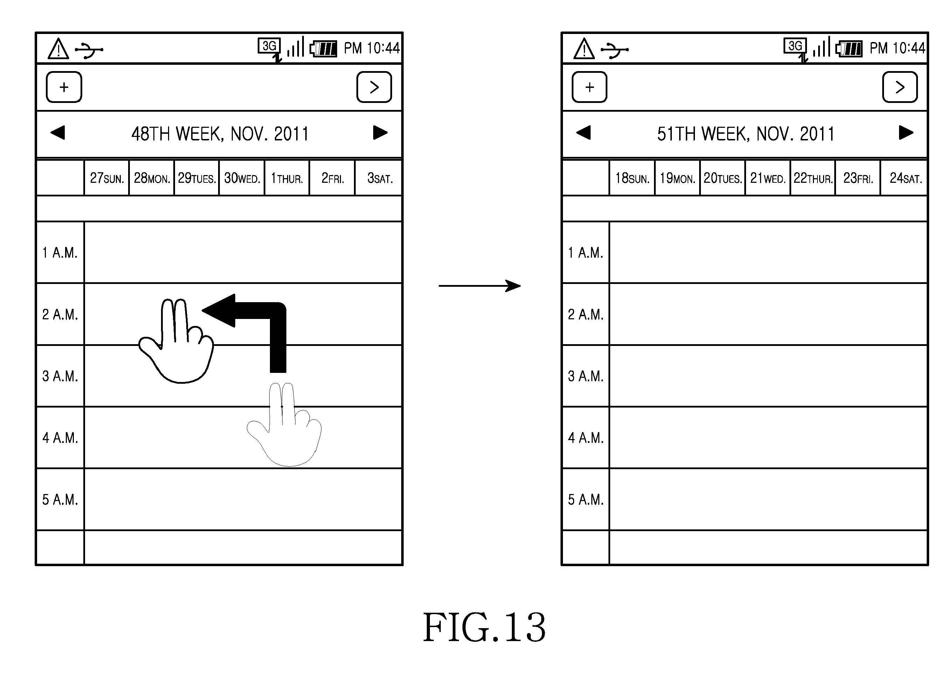

FIG. 12 includes screens illustrating an example of a process of detecting a curved gesture and updating a weekly calendar in an electronic device according to an exemplary embodiment of the present invention. FIG. 13 includes screens illustrating an example of a process of detecting a curved gesture and updating a weekly calendar in an electronic device according to an exemplary embodiment of the present invention.

Referring to FIG. 12, when a drag which proceeds up and right is sensed in a state in which a weekly calendar of the 48th week of 2011 is displayed, the electronic device 100 may update the calendar of the 48th week of 2011 which is currently being displayed to a calendar of the 45th week of 2011. Referring to FIG. 13, when a drag which proceeds up and left is sensed in a state in which a weekly calendar of the 48th week of 2011 is displayed, the electronic device 100 may update the calendar of the 48th week of 2011 which is currently being displayed to a calendar of the 51th week of 2011.

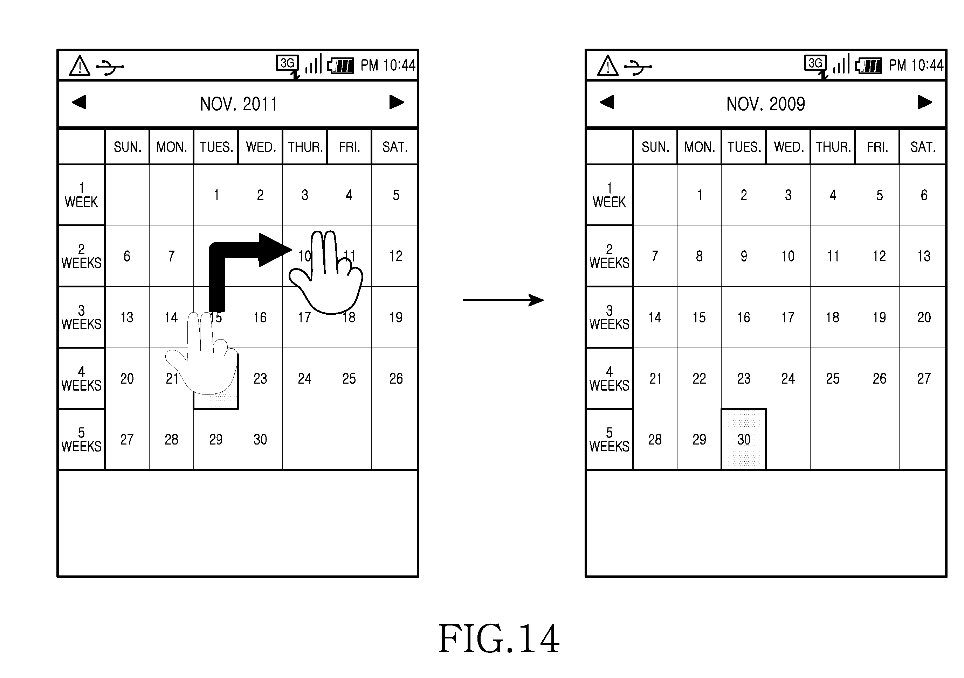

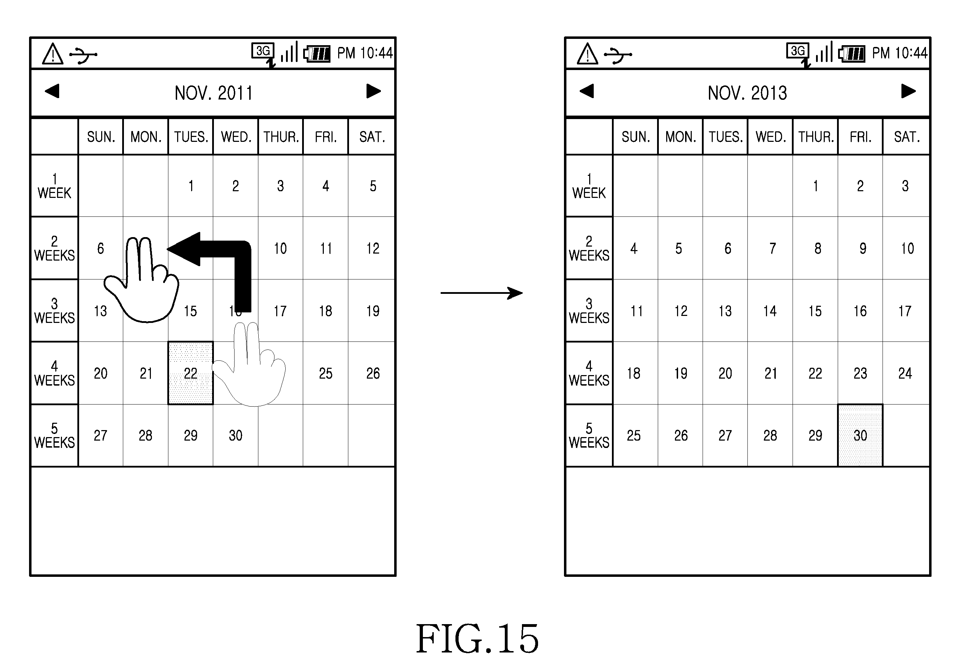

FIG. 14 includes screens illustrating an example of a process of detecting a curved gesture and updating a monthly calendar in an electronic device according to an exemplary embodiment of the present invention. FIG. 15 includes screens illustrating an example of a process of detecting a curved gesture and updating a monthly calendar in an electronic device according to an exemplary embodiment of the present invention.

Referring to FIG. 14, when a drag which proceeds up and right is sensed in a state in which a monthly calendar for November 2011 is displayed, the electronic device 100 may update the calendar for November 2011 which is currently being displayed to a calendar for November 2009. Referring to FIG. 15, when a drag which proceeds up and left is sensed in a state in which a monthly calendar for November 2011 is displayed, the electronic device 100 may update the calendar for November 2011 which is currently being displayed to a calendar for November 2013.

Exemplary embodiments and all function operations of the present invention described in the specification of the present invention may be executed by computer software, firmware, or hardware, or a combination thereof, which include structures disclosed in the specification of the present invention and equivalent structures of them. Exemplary embodiments of the present invention described in the specification may be implemented by one or more computer program products such as, for example, one or more modules of computer program instructions, which are executed by data processing devices or are encoded on a non-transitory computer readable medium for controlling operations of these devices.

The non-transitory computer readable medium may be a machine readable storage medium, a machine readable storage board, a memory device, composition of materials which have an influence on a machine readable propagation stream, or a combination thereof. The term "data processing device" includes a programmable processor, a computer, or all devices, apparatuses, and machines, including a multi-processor or a computer, for processing data. The devices may include codes for being added in hardware and generating execution environments for a corresponding computer program such as, for example, codes configuring processor firmware, a protocol stack, a database management system, an operating system, or a combination thereof.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method of displaying a calendar in an electronic device, the method comprising:
displaying an electronic calendar;
detecting a gesture on the displayed electronic calendar;
updating the displayed electronic calendar to a calendar which has a difference by a predetermined period according to a period of the displayed electronic calendar when the detected gesture corresponds to a predetermined gesture; and
displaying the updated calendar,
wherein the predetermined period corresponds to a period which is longer than that of the displayed electronic calendar.

2. The method of claim 1, wherein the period of the displayed electronic calendar is any one of a day, a week, and a month.

3. The method of claim 1, wherein the predetermined period corresponds to a period which is longer than one day when the displayed electronic calendar corresponds to a daily calendar,
wherein the predetermined period corresponds to a period which is longer than one week when the displayed electronic calendar corresponds to a weekly calendar, and
wherein the predetermined period corresponds to a period which is longer than one month when the displayed electronic calendar corresponds to a monthly calendar.

4. The method of claim 1, wherein the updating of the displayed electronic calendar to the calendar which has a difference by the predetermined period according to the period of the displayed electronic calendar and the displaying of the updated calendar comprises:
updating the displayed electronic calendar to a calendar before or after the predetermined period; and
displaying the updated calendar.

5. The method of claim 1, wherein the gesture includes at least one of a tap, a tap during a certain time, a double tap, and a drag.

6. The method of claim 1, wherein the detecting of the gesture on the displayed electronic calendar comprises:
detecting a touch on a touch-sensitive display while a device having the touch-sensitive display displays the electronic calendar; and
determining whether the detected touch correspond to the gesture.

7. The method of claim 1, wherein the detecting of the gesture on the displayed electronic calendar comprises:
detecting at least two or more touches on a touch-sensitive display while a device having the touch-sensitive display displays the electronic calendar; and
determining whether at least the two or more detected touches correspond to the gesture.

8. The method of claim 1, wherein the detecting of the gesture on the displayed electronic calendar comprises:
detecting a proximity touch on a proximity touch-sensitive display while a device having the proximity touch-sensitive display displays the electronic calendar; and
determining whether the detected proximity touch corresponds to the gesture.

9. The method of claim 1, wherein the predetermined period is variable according to at least one of a speed and an acceleration of the gesture.

10. An electronic device for displaying a calendar, the electronic device comprising:
at least one processor;
a touch-sensitive display;
a memory; and
at least one program, each which is stored in the memory and is configured to be executed by the at least one processor,
wherein each of the at least one program includes an instruction for displaying an electronic calendar, detecting a gesture on the displayed electronic calendar, updating the displayed electronic calendar to a calendar which has a difference by a predetermined period according to a period of the displayed electronic calendar when the detected gesture corresponds to a predetermined gesture, and displaying the updated calendar, wherein the predetermined period corresponds to a period which is longer than that of the displayed electronic calendar.

11. The electronic device of claim 10, wherein the period of the displayed electronic calendar is any one of a day, a week, and a month.

12. The electronic device of claim 10, wherein the predetermined period corresponds to a period which is longer than one day when the displayed electronic calendar corresponds to a daily calendar,
wherein the predetermined period corresponds to a period which is longer than one week when the displayed electronic calendar corresponds to a weekly calendar, and
wherein the predetermined period corresponds to a period which is longer than one month when the displayed electronic calendar corresponds to a monthly calendar.

13. The electronic device of claim 10, wherein each of the at least one program includes an instruction for updating the displayed electronic calendar to a calendar before or after the predetermined period and for displaying the updated calendar.

14. The electronic device of claim 10, wherein the gesture includes at least one of a tap, a tap during a certain time, a double tap, and a drag.

15. The apparatus of claim 10, wherein the apparatus arranged to implement a method of one of claims 6 to 9.
